# EUROPÄISCHE PATENTSCHRIFT

(11) **EP 1 995 498 B1**
(45) Veröffentlichungstag und Bekanntmachung des Hinweises auf die Patenterteilung: **11.04.2012**
(21) Anmeldenummer: 08155249.9
(22) Anmeldetag: 28.04.2008
(51) Int. Cl.: F16H 61/00

(54) **Verfahren zum Betätigen einer Getriebeeinrichtung**
Method for actuating a geared device
Procédé d'actionnement d'une boîte de vitesses

(30) Priorität: 23.05.2007 DE 102007023956
(43) Veröffentlichungstag der Anmeldung: 26.11.2008
(73) Patentinhaber: ZF Friedrichshafen AG, 88038 Friedrichshafen (DE)
(72) Erfinder: Schiele, Peter, 88079 Kressbronn (DE); Steinhauser, Klaus, 88079 Kressbronn (DE)

(56) Entgegenhaltungen:
- EP-A- 0 992 714
- EP-A- 1 069 346
- DE-A1-102006 014 756
- FR-A- 2 802 866

## Beschreibung

Die Erfindung betrifft ein Verfahren zum Betätigen einer Getriebeeinrichtung mit mehreren von einer Druckquelle mit Hydraulikfluid beaufschlagbaren Schaltelementen gemäß der im Oberbegriff des Patentanspruchs 1 näher definierten Art.

So genannte Motor-Start-Stopp-Funktionen werden sowohl zur Reduktion eines Kraftstoffverbrauches als auch zur Verminderung von Schadstoffemissionen von mit Brennkraftmaschinen ausgeführten und aus der Praxis bekannten Fahrzeugen eingesetzt. Mittels dieser Funktionen werden die Brennkraftmaschinen mit Hilfe verschiedener Fahrzeugkonzepte in geeigneten Betriebszuständen der Fahrzeuge abgeschaltet, wobei die Funktionen in Abhängigkeit von Betriebszuständen verschiedenster Fahrzeugkomponenten aktiviert oder deaktiviert werden und selbst bei kurzen Fahrzeugstillständen ein Abschalten der Brennkraftmaschinen eines Fahrzeuges auslösen. Des Weiteren werden die Brennkraftmaschinen jeweils bei Vorliegen vordefinierter Startkriterien wieder gestartet bzw. zugeschaltet.

Um eine Beeinträchtigung eines herkömmlichen Fahrbetriebes durch eine Motor-Start-Stopp-Funktion zu vermeiden, ist bei einer fahrerseitig angeforderten Weiterfahrt des Fahrzeuges, insbesondere bei der Einfahrt in stark befahrene und vorfahrtberechtigte Strassen, ein kurzer Startvorgang der Brennkraftmaschine und ein sofortiger Kraftflussaufbau in einer Getriebeeinrichtung eines Fahrzeuges erforderlich. Bei herkömmlich ausgeführten Automatgetrieben oder automatisierten Schaltgetrieben, welche mit als nasslaufende Lamellenkupplungen oder Lamellenbremsen ausgeführten Schaltelementen zum Zu- und Abschalten verschiedener Übersetzungsstufen der Getriebeeinrichtung ausgebildet sind, werden die Schaltelemente über eine Getriebehauptpumpe im Wesentlichen nur bei laufender Brennkraftmaschine mit dem erforderlichen Betätigungsdruck versorgt. Dabei wird der Ansteuerdruck bzw. ein Betätigungsdruck eines Schaltelementes jeweils über wenigstens einen elektrisch ausgeführten Aktor eingestellt.

Aus der nicht vorveröffentlichten DE 10 2006 014 756.1 ist eine Vorrichtung zum Speichern von Hydraulikfluid eines Hydrauliksystems einer Getriebeeinrichtung sowie ein Verfahren zum Betreiben einer derartigen Vorrichtung bekannt, um ein mit einer Motor-Start-Stopp-Funktion betriebenes Fahrzeug mit einer gewünschten Spontaneität betreiben zu können. Die Vorrichtung bzw. die Hydraulikspeichereinrichtung ist als ein federbelasteter Ölvolumenspeicher mit elektromechanischer Rastierung ausgeführt.

Die Hydraulikspeichereinrichtung wird während der zugeschalteten Brennkraftmaschine mittels eines von einer Getriebehauptpumpe erzeugten hydraulischen Drucks befüllt, wobei ein Kolben der Hydraulikspeichereinrichtung mit zunehmendem Befüllgrad der Hydraulikspeichereinrichtung in eine Stellung verbracht wird, in dieser von einer Halteeinrichtung arretiert und gehalten wird. Bei einem Abschalten der Brennkraftmaschine, bei dem der Antrieb der Getriebehauptpumpe Null ist, sinkt der Hydraulikdruck im Hydrauliksystem der Getriebeeinrichtung im Wesentlichen auf Null ab. Liegt von einer Motor-Start-Stopp-Funktion eine Anforderung zum Zuschalten der Brennkraftmaschine vor, wird die Herstellung des Kraftflusses in der Getriebeeinrichtung durch Ausschieben des in der Hydraulikspeichereinrichtung gespeicherten Hydraulikfluidvolumens während eines Zuschaltvorganges der Brennkraftmaschine auf einfache Art und Weise unterstützt.

Des Weiteren wird bei Erreichen des durch die Abschaltung der Brennkraftmaschine bewirkten drucklosen Zustandes im Hydrauliksystem der Getriebeeinrichtung eine Bestromung der elektrischen Aktoren auf ein so genanntes Bereitschaftsniveau eingestellt, auf dem über die Aktoren in der Getriebeeinrichtung lediglich so genannte Diagnosefunktionen durchführbar sind und auf dem eine elektrische Aufnahmeleistung der Getriebeeinrichtung minimiert ist, um ein Bordnetz des Fahrzeuges in nicht unerheblichem Umfang entlasten zu können. Darüber hinaus wird die Bestromung der Aktoren bei Vorliegen einer Anforderung von der Motor-Start-Stopp-Funktion zum Zuschalten der Brennkraftmaschine bzw. beim Erkennen eines Starts der Brennkraftmaschine vom Bereitschaftsniveau auf ein Betriebsniveau, auf welchem die Aktoren jeweils mit einem zu einem angeforderten Betriebszustand, wie einem Einlegen einer Gangstufe, einem neutralen Betriebszustand oder einem Parkbetriebszustand, äquivalenten Stromwert bestromt werden, verändert. Durch die Veränderung der Bestromung der Aktoren vom Bereitschaftsniveau auf das Betriebsniveau werden die zur Darstellung des gewünschten Betriebszustandes der Getriebeeinrichtung zuzuschaltenden Schaltelemente gleichzeitig vom Hydrauliksystem der Getriebeeinrichtung mit Hydraulikfluid beaufschlagt und befüllt.

Dabei ist es jedoch von Nachteil, dass für die Minimalbestromung der Aktoren einer Getriebesteuereinrichtung zusätzliche Betätigungsroutinen für die Bestromung der Aktoren vorgesehen werden müssen, um die Aktoren in diesem Betriebszustand einer Getriebeeinrichtung zumindest noch mit den für Diagnosefunktionen erforderlichen Stromwerten bestromen zu können.

Des Weiteren ist es aus der gattungsbildenden EP 1 069 346 B1 bekannt, eine Stromlast eines Bordnetzes eines Fahrzeuges bei abgeschalteter Brennkraftmaschine durch Bestromen der Aktoren einer Getriebeeinrichtung auf einem niedrigeren Niveau als bei zugeschalteter Brennkraftmaschine zu minimieren.

Auch bei dieser bekannten Lösung sind nachteilhafterweise neben den für die Bestromung der Aktoren während eines normalen Fahrbetriebes vorgesehen Betätigungsabläufen gesonderte Betätigungsabläufe zur Darstellung des durch den verringerten Strombedarf gekennzeichneten Betriebsmodus einer Getriebeeinrichtung vorzusehen, welche jedoch zur Gewährleistung der geforderten Funktionalitäten einen komplexen Aufbau aufweisen und daher entsprechenden Speicherplatz benötigen sowie Betätigungszeiten einer Getriebeeinrichtung aufgrund langer Rechenlaufzeiten in unerwünschtem Umfang verlängern.

Darüber hinaus weisen die Schaltelemente einer Getriebeeinrichtung aufgrund der bei abgeschalteter Brennkraftmaschine vorgeschlagenen Sonderbestromung der Aktoren bei Vorliegen eines einem Normalbetrieb der Getriebeeinrichtung entsprechenden Systemdruckes im Hydrauliksystem Übertragungsfähigkeiten auf, die unter Umständen zu einem Blockieren einer Getriebeausgangswelle und eines damit verbundenen Abtriebs eines Fahrzeuges führen können. Um zu verhindern, dass die Funktion zur Darstellung der Minimalbestromung der Aktoren im regulären Fahrbetrieb ausgewählt wird, sind wiederum weitere Sicherungsmaßnahmen vorzusehen, die jedoch einen die Herstellkosten einer Getriebeeinrichtung weiter erhöhenden Mehraufwand verursachen.

Der vorliegenden Erfindung liegt daher die Aufgabe zugrunde, ein Verfahren zum Betätigen einer Getriebeeinrichtung mit mehreren von einer Druckquelle mit Hydraulikfluid beaufschlagbaren Schaltelementen zur Verfügung zu stellen, mittels welchem ein Strombedarf einer Getriebeeinrichtung bei abgeschalteter Brennkraftmaschine im Vergleich zu herkömmlich betriebenen Getriebeeinrichtungen ohne die Herstellkosten einer Getriebeeinrichtung erhöhenden Mehraufwand reduzierbar ist.

Erfindungsgemäß wird diese Aufgabe mit einem Verfahren mit den Merkmalen des Patentanspruches 1 gelöst.

Bei dem erfindungsgemäßen Verfahren zum Betätigen einer Getriebeeinrichtung mit mehreren von einer Druckquelle mit Hydraulikfluid beaufschlagbaren Schaltelementen zum Zu- und Abschalten verschiedener Übersetzungsstufen und mit mehreren elektrischen Aktoren eines Hydrauliksystems der Getriebeeinrichtung zum Einstellen von Betätigungsdrücken für die Schaltelemente wird die Bestromung der Aktoren bei Vorliegen einer Anforderung einer Motor-Start-Stopp-Funktion zum Abschalten einer Brennkraftmaschine eines die Getriebeeinrichtung aufweisenden Antriebsstranges von einem Betriebsniveau, auf dem die Aktoren jeweils mit einem zu einem betriebszustandsabhängigen Betätigungsdruck der Schaltelemente äquivalenten Stromwert bestromt werden, auf ein Bereitschaftsniveau eingestellt. Bei einer Anforderung der Motor-Start-Stopp-Funktion zum Zuschalten der Brennkraftmaschine wird die Bestromung der Aktoren vom Bereitschaftsniveau auf das Betriebsniveau eingestellt, wobei ein Systemdruck im Hydrauliksystem bei abgeschalteter Brennkraftmaschine im Wesentlichen Null ist und ein Stromverbrauch in der Getriebeeinrichtung während einer Bestromung der Aktoren auf dem Bereitschaftsniveau niedriger ist als auf dem Betriebsniveau.

Erfindungsgemäß entspricht das bei Vorliegen einer Anforderung zum Abschalten der Brennkraftmaschine zur Bestromung der Aktoren ausgewählte Bereitschaftsniveau einem zur Darstellung einer Übersetzung der Getriebeeinrichtung vorgesehenen Betriebsniveau.

Damit wird der Strombedarf einer Getriebeeinrichtung zumindest bei abgeschalteter Brennkraftmaschine im Vergleich zu herkömmlich betriebenen Getriebeeinrichtungen ohne zusätzlichen Mehraufwand auf einfache Art und Weise reduziert. Dabei ist besonders von Vorteil, dass im Bereich der Getriebeeinrichtung keine aus dem Stand der Technik bekannte Minimalbestromung der Aktoren durchgeführt wird, die nur über zusätzliche Betätigungsroutinen darstellbar ist.

Im Gegensatz zu einer Minimalbestromung werden die Aktoren bei Vorliegen einer Anforderung zum Abschalten einer Brennkraftmaschine mittels der erfindungsgemäßen Lösung bereits vor, während des automatischen Abstellvorganges der Brennkraftmaschine oder erst bei abgeschalteter Brennkraftmaschine in einen Betriebszustand versetzt, zu dem diese bei entsprechendem Systemdruck in dem Hydrauliksystem einen Wechsel von der Übersetzung bzw. einer Gangstufe der Getriebeeinrichtung, d. h. von einer sogenannten Ausgangsübersetzung, die vor dem Wechsel der Bestromung der Aktoren in der Getriebeeinrichtung eingelegt ist, hin zu einem definierten Zielgang, welcher aus der Ganglogik bzw. der Aktorlogik heraus eine geringere Stromaufnahme der Getriebeeinrichtung zur Folge hat, auslösen.

Die erfindungsgemäße Lösung nutzt dabei die Kenntnis, dass eine Brennkraftmaschine von einer Motor-Start-Stopp-Funktionen üblicherweise nahe eines Fahrzeugstillstandes oder während eines Fahrzeugstillstandes abgeschaltet wird, wobei dann in einer Getriebeeinrichtung zumeist eine Anfahrübersetzung eingestellt ist. Dabei werden die elektrischen Aktoren zur Darstellung einer Anfahrübersetzung in der Getriebeeinrichtung oft mit höheren Stromwerten bestromt als dies zur Darstellung einer höheren Übersetzungsstufe der Fall ist. Diese Vorgehensweise resultiert aus Sicherheitsanforderungen, mittels welchen bei einem Abfall der Stromversorgung das Einlegen einer zu geringen Übersetzungsstufe in der Getriebeeinrichtung verhindert werden soll. Damit soll besonders bei höheren Fahrzeuggeschwindigkeiten ein unerwünschtes und sicherheitskritisches Blockieren der Antriebsräder sicher vermieden werden.

Aus diesem Grund ist es bei einer vorteilhaften Variante des erfindungsgemäßen Verfahrens vorgesehen, dass mittels des Betriebsniveaus, auf dem die Aktoren zum Ausgabezeitpunkt der Abschaltanforderung der Brennkraftmaschine noch bestromt werden, in der Getriebeeinrichtung eine Anfahrübersetzung darstellbar ist.

Bei einer weiteren vorteilhaften Variante des erfindungsgemäßen Verfahrens ist mittels des Bereitschaftsniveaus, auf dem die Aktoren vorzugsweise spätestens bei abgeschalteter Brennkraftmaschine bestromt werden, in der Getriebeeinrichtung ein so genannter Notgang, der sich vorzugsweise im mechanischen Notlauf der Getriebeeinrichtung einstellt, darstellbar.

Hiervon abweichend besteht jedoch auch die Möglichkeit, die Aktoren mit Stromwerten zu bestromen, auf deren Niveau die Aktoren jeweils in einen Betriebszustand überführt werden, zu welchen sich in der Getriebeeinrichtung ein Neutralbetriebszustand oder ein Parkbetriebszustand einstellt, wobei der Strombedarf der Getriebeeinrichtung auf letztgenanntem Niveau der Stromwerte niedriger ist als auf dem Betriebsniveau, zu dem die Abschaltanforderung der Brennkraftmaschine ergeht. Dabei entsprechen die Stromwerte, mit denen die Aktoren bei zugeschalteter oder bei abgeschalteter Brennkraftmaschine zur Darstellung des Neutralbetriebszustandes oder des Parkbetriebszustandes der Getriebeeinrichtung jeweils bestromt werden, sowohl dem Betriebsniveau als auch dem Bereitschaftsniveau.

Der bei Vorliegen einer Anforderung zum Abschalten der Brennkraftmaschine vorgesehene Wechsel der Bestromung der Aktoren, bei der die Getriebeeinrichtung aktorseitig von einer Ausgangsübersetzung in eine Zielübersetzung überführt wird, wird bei einer weiteren vorteilhaften Variante des erfindungsgemäßen Verfahrens mittels eines während eines Fahrbetriebes eines Fahrzeuges vorgesehenen Schaltablaufes durchgeführt, wobei über den Schaltablauf vorzugsweise auch mehrere aufeinander folgende Schaltungen bzw. Mehrfachschaltungen realisierbar sind.

Damit ist eine Getriebeeinrichtung bei Vorliegen einer Anforderung zum Abschalten der Brennkraftmaschine aus einem Betriebszustand, in dem der Strombedarf der Getriebeeinrichtung hoch ist, mit Hilfe bereits vorhandener Schaltabläufe, wie für Einfach- oder Mehrfachschaltungen, im Vergleich zu bestehenden Getriebesystemen ohne wesentlichen zusätzlichen Aufwand in einen stromreduzierten Betriebszustand überführbar.

Ist die Getriebeeinrichtung mit einem invers-proportionalen Aktor zur Einstellung eines Systemdruckes in dem Hydrauliksystem ausgeführt und steigt der über diesen Aktor eingestellte Systemdruck bei sinkenden Stromwerten für den Aktor an, wird die Bestromung des invers-proportionalen Aktors bei Vorliegen einer Anforderung zum Abschalten der Brennkraftmaschine bei einer vorteilhaften Variante des Verfahrens auf einen vordefinierten Wert reduziert, um Leckagen des Hydrauliksystems im Bereich des invers-proportionalen Aktors zu verringern. Dies resultiert aus der Tatsache, dass derartige Aktoren oftmals als Druckbegrenzungsventile ausgebildet sind und der aktuell in dem Hydrauliksystem einzustellende Systemdruck durch begrenzen eines Förderdruckes der Getriebehauptpumpe eingestellt wird. Dabei wird im Bereich des Aktors bekannterweise überschüssiges Hydraulikfluid in ein Hydraulikfluidreservoir bzw. einen Ölsumpf der Getriebeeinrichtung abgespritzt. Die Menge des abgespritzten Hydraulikfluides nimmt mit sinkenden Stromwerten ab, so dass die Aktorleckagen mit der letztbeschriebenen Vorgehensweise auf einfache Art und Weise reduziert werden.

Dieser Betriebszustand des invers-proportionalen Aktors kann bei abgeschalteter Brennkraftmaschine beibehalten werden und erst wieder kurz vor oder während eines Zuschaltvorganges bzw. nach dem Start der Brennkraftmaschine in die für einen während eines normalen Fahrbetriebes eines Fahrzeuges bevorzugten Zustand überführt werden.

Bei einer weiteren vorteilhaften Variante des erfindungsgemäßen Verfahrens wird die bei Vorliegen einer Anforderung zum Abschalten der Brennkraftmaschine aktivierte Wechselroutine zum Reduzieren der Höhe der Bestromung der Aktoren vom Betriebsniveau auf das Bereitschaftsniveau bei Vorliegen einer Anforderung zum Zuschalten der Brennkraftmaschine in einem Betriebszustand der Brennkraftmaschine, in dem die Brennkraftmaschine noch nicht abgeschaltet ist und in dem die Drehzahl der Brennkraftmaschine sich oberhalb einer Grenzdrehzahl befindet, unterhalb der die Drehzahl der Brennkraftmaschine zum Zuschalten der Brennkraftmaschine zunächst auf Null zu führen ist, deaktiviert und die Brennkraftmaschine ohne zusätzliche Maßnahmen weiter betrieben. Damit ist auf einfache Art und Weise ein so genanntes Durchstarten der Brennkraftmaschine möglich, wenn die Brennkraftmaschine eine hierfür erforderliche Drehzahl noch nicht unterschritten hat.

Eine weitere vorteilhafte Variante des Verfahrens nach der Erfindung ist dadurch gekennzeichnet, dass die Aktoren während des Wechsels der Bestromung vom Bereitschaftsniveau auf das Betriebsniveau derart bestromt werden, dass ein Betätigungsdruck eines zur Darstellung der durch das Betriebsniveau einzustellenden Zielübersetzung vorgesehenen nicht kraftschließenden Schaltelementes oder die Betätigungsdrücke mehrerer zur Darstellung der Zielübersetzung vorgesehener nicht kraftschließender Schaltelemente auf einen Schließdruck, zu dem das oder die Schaltelemente wenigstens annähernd ihre volle Übertragungsfähigkeit aufweisen, angehoben wird oder angehoben werden und daran anschließend der Betätigungsdruck eines zur Darstellung der Zielübersetzung vorgesehenen kraftschließenden Schaltelementes moduliert auf einen Schließdruck angehoben wird. Damit sind die zur Darstellung einer durch das Zuschalten der Brennkraftmaschine angeforderten Zielübersetzung erforderlichen nicht kraftschließenden Schaltelemente oder ein zur Darstellung eben dieser Zielübersetzung vorgesehenes nicht kraftschließendes Schaltelement innerhalb kurzer Betätigungszeiten in den angeforderten Zustand überführbar, wobei bei der Betätigung dieses Schaltelementes bzw. dieser Schaltelemente grundsätzlich keine den Fahrkomfort unterstützenden Maßnahmen vorzusehen sind.

Dabei kann es vorgesehen sein, dass der Betätigungsdruck der nicht kraftschließenden Schaltelemente gleichzeitig oder nacheinander durch entsprechende Bestromung der zugeordneten Aktoren auf den Schließdruck geführt wird und daran anschließend der Betätigungsdruck des kraftschließenden Schaltelementes auf das Niveau des Schließdruckes eingestellt wird.

Alternativ hierzu besteht jedoch auch die Möglichkeit, die Aktoren während des Wechsels der Bestromung vom Bereitschaftsniveau auf das Betriebsniveau derart zu bestromen, dass der Betätigungsdruck wenigstens eines Schaltelementes auf das Niveau des Schließdruckes geführt wird und anschließend der Betätigungsdruck von zumindest einem weiteren nicht kraftschließenden Schaltelement und einem kraftschließenden Schaltelement wenigstens annähernd gleichzeitig vorzugsweise moduliert auf das Niveau des Schließdruckes eingestellt werden.

Derartige Maßnahmen sind bei diesen Vorgehensweisen lediglich während der Betätigung des zur Darstellung der durch den Zuschaltvorgang der Brennkraftmaschine angeforderten Zielübersetzung zuzuschaltenden kraftschließenden Schaltelementes zu beachten, welches erst nach einem nicht kraftschließenden Schaltelement oder nach den nicht kraftschließenden Schaltelementen in den für die Darstellung der angeforderten Zielübersetzung vorgesehenen Betriebszustand überführt wird.

Eine weitere vorteilhafte Variante des erfindungsgemäßen Verfahrens sieht vor, dass der bei Vorliegen einer Anforderung zum Zuschalten der Brennkraftmaschine vorgesehene Wechsel der Bestromung der Aktoren, bei der die Getriebeeinrichtung aktorseitig von einer Ausgangsübersetzung in eine Zielübersetzung überführt wird, mittels eines während eines Fahrbetriebes eines Fahrzeuges vorgesehenen Schaltablaufes durchgeführt wird, wobei mittels des Schaltablaufes vorzugsweise auch mehrere aufeinander folgende Schaltungen realisierbar sein können. Damit ist eine Getriebeeinrichtung aus einem Betriebszustand, in dem der Strombedarf der Getriebeeinrichtung reduziert ist, in einen für einen Fahrbetrieb vorgesehenen Betriebszustand im Vergleich zu bestehenden Getriebesystemen ohne wesentlichen zusätzlichen Aufwand überführbar. Dies ist mit letztgenannter Variante des Verfahrens auch dann möglich, wenn beim Übergang vom stromreduzierten Betriebszustand der Getriebeeinrichtung in den durch die Zuschaltanforderung einzustellenden Betriebszustand mehrere Übersetzungsstufen bzw. Gangstufen liegen und der Wechsel zwischen der Ausgangsübersetzung und der Zielübersetzung während eines normalen Fahrbetriebes eines Fahrzeuges ebenfalls mittels Mehrfachhoch- oder Rückschaltungen realisiert wird.

Um ein die Aktoren mit elektrischer Energie versorgendes Bordnetz eines Fahrzeuges auf einfache Art und Weise während der Veränderung der Bestromung der Aktoren beim Wechsel vom Betriebsniveau auf das Bereitschaftsniveau oder vom Bereitschaftsniveau auf das Betriebsniveau zu entlasten, wird der Wechsel der Bestromung im Bereich der verschiedenen Aktoren nicht gleichzeitig sondern sukzessive bzw. nacheinander durchgeführt.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: eine stark schematisierte Darstellung eines Fahrzeuges mit einem eine Getriebeeinrichtung und eine Brennkraftmaschine aufweisenden Antriebsstrang; und
- Fig. 2: mehrere zeitliche Verläufe verschiedener Betriebszustandsparameter der Getriebeeinrichtung des Fahrzeuges gemäß Fig. 1.

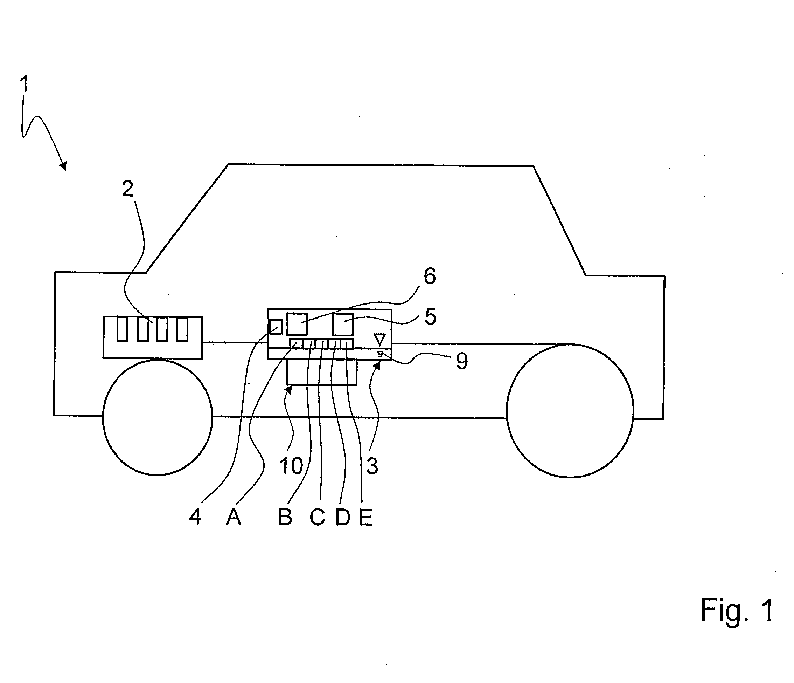

In Fig. 1 ist ein Fahrzeug 1 mit einer Brennkraftmaschine 2 und einer Getriebeeinrichtung 3 mit mehreren von einer Druckquelle 4 zum Zu- und Abschalten verschiedener Übersetzungsstufen mit hydraulischem Druck beaufschlagbaren Schaltelementen A bis E und mit mehreren elektrischen Aktoren 7, 8 eines Hydrauliksystems der Getriebeeinrichtung 3 zum Einstellen von Betätigungsdrücken für die Schaltelemente A bis E dargestellt.

Die Getriebeeinrichtung 3 kann grundsätzlich jedes aus der Praxis bekannte automatisierte Handschaltgetriebe oder Automatgetriebe, wie ein Doppelkupplungsgetriebe, ein CVT-Getriebe (Continuously-Variable-Transmission), ein Stufenautomatgetriebe usw., sein, welches mit hydraulisch ansteuerbaren Schaltelementen A bis E, beispielsweise mit reibschlüssigen Lamellenkupplungen oder Lamellenbremsen, ausgebildet ist.

Für eine Verbrauchsoptimierung und eine Reduzierung von Schadstoffemissionen des Fahrzeuges 1 ist eine so genannte Motor-Start-Stopp-Funktion vorgesehen, mittels welcher die Brennkraftmaschine 2 in vordefinierten Betriebszuständen des Fahrzeuges 1 abgeschaltet und bei Vorliegen eines oder mehrerer vordefinierter Startkriterien wieder gestartet wird.

So wird die Brennkraftmaschine 2 beispielsweise bei aktiviertem Bremslicht, bei betätigtem Bremspedal oder bei anderweitig aktivierter Betriebsbremse und im Fahrzeugstillstand und/oder bei fahrerseitig betätigtem Kupplungspedal selbst während sehr kurzer Stillstandsphasen des Fahrzeuges bei Vorliegen einer Wählhebelposition "D" für Vorwärtsfahrt abgeschaltet und bei Vorliegen verschiedener Startkriterien, wie beispielsweise bei Unterschreiten einer Bremsdruckschwelle, bei einem Lösen der Fahrzeugbremse, bei deaktiviertem Bremslicht, bei einer fahrerseitigen Wählhebelbetätigung in eine Position, in der ein Start der Brennkraftmaschine 2 angefordert wird, bei einer Betätigung des Gaspedals größer oder kleiner als ein Schwellwert, bei einer steuersystemseitigen Ankündigung eines Startvorganges der Brennkraftmaschine, bei Vorliegen einer Abtriebsdrehzahl größer oder kleiner eines Schwellwertes, bei Vorliegen einer vordefinierten Ladebilanz eines elektrischen Speichers des Fahrzeuges oder in Abhängigkeit von Komfortkriterien, wie eine Anforderung zur Klimatisierung der Fahrgastzelle, wieder gestartet.

Zusätzlich ist die Getriebeeinrichtung 3 vorliegend mit einem in der Zeichnung nicht näher dargestellten Hydrauliksystem, einem Ölsumpf 9 und einer Hydraulikspeichereinrichtung 10 zum Speichern von Hydraulikfluid des Hydrauliksystems der Getriebeeinrichtung 3 ausgebildet.

Die der Getriebeeinrichtung 3 zugeordnete Hydraulikspeichereinrichtung 10 entspricht einer in der DE 10 2006 014 756.1 beschriebenen Vorrichtung zum Speichern von Hydraulikfluid eines Hydrauliksystems einer Getriebeeinrichtung und wird gemäß dem dort ebenfalls vorgeschlagenen Verfahren betrieben.

Eine Bestromung der Aktoren 7 und 8 wird bei Vorliegen einer Anforderung der Motor-Start-Stopp-Funktion zum Abschalten der Brennkraftmaschine 2 von einem Betriebsniveau, auf dem die Aktoren 7 und 8 jeweils mit einem zu einem betriebszustandsabhängigen Betätigungsdruck der Schaltelemente A bis E äquivalenten Stromwert bestromt werden, auf ein Bereitschaftsniveau eingestellt, wobei die Bestromung der Aktoren 7 und 8 bei einer Anforderung der Motor-Start-Stopp-Funktion zum Zuschalten der Brennkraftmaschine 2 vom Bereitschaftsniveau wiederum auf das Betriebsniveau eingestellt wird.

Befindet sich das mit der Getriebeeinrichtung 3 ausgeführte Fahrzeug 1 nahe einem Fahrzeugstillstand und wird die Brennkraftmaschine 2 mit einer Motordrehzahl betrieben, welche im wesentlichen einer Leerlaufdrehzahl entspricht, wird die Brennkraftmaschine 2 von der Motor-Start-Stopp-Funktion abgeschaltet und die Motordrehzahl sinkt von der Leerlaufdrehzahl im wesentlichen auf Null ab.

Die Anforderung de Motor-Start-Stopp-Funktion zum Abschalten der Brennkraftmaschine ist dem Abschaltzeitpunkt der Brennkraftmaschine 2 zeitlich vorgelagert und bewirkt vorzugsweise zusätzlich, dass die der Getriebeeinrichtung 3 zugeordnete Hydraulikspeichereinrichtung 10 vor dem Abschaltzeitpunkt der Brennkraftmaschine 2 vollständig gefüllt und in ihrem vollständig gefüllten Zustand durch eine Halteeinrichtung arretiert und gehalten wird.

Damit wird das in der Hydraulikspeichereinrichtung 10 gespeicherte Hydraulikfluidvolumen auch bei abgeschalteter Brennkraftmaschine 2 gespeichert, da in abgeschaltetem Zustand der Brennkraftmaschine 2 die Druckquelle 4 bzw. die Getriebehauptpumpe der Getriebeeinrichtung 3, die von der Brennkraftmaschine 3 angetrieben wird, die Förderung einstellt und der Systemdruck im Hydrauliksystem der Getriebeeinrichtung 3 auf Null abfällt.

Die Aktoren 7 und 8 werden vor dem Wechsel der Bestromung vom Betriebsniveau auf das Bereitschaftsniveau mit Stromwerten bestromt, das in der Getriebeeinrichtung 3 bei entsprechend fördernder Getriebehauptpumpe 4 und bei einer Wählhebelstellung D eine Anfahrübersetzung in der Getriebeeinrichtung 3 eingelegt ist.

In Abhängigkeit des jeweils vorliegenden Anwendungsfalles wird zum Zeitpunkt der Ausgabe der Anforderung zum Abschalten der Brennkraftmaschine 2, zu einem dem Anforderungszeitpunkt nachgeschalteten Zeitpunkt, zum Abschaltzeitpunkt oder erst nach dem Abschaltzeitpunkt der Brennkraftmaschine 2 vom Betriebsniveau auf ein Bereitschaftsniveau abgesenkt, wobei das bei abgeschalteter Brennkraftmaschine 2 zur Bestromung der Aktoren 7 und 8 ausgewählte Bereitschaftsniveau einem zur Darstellung einer höheren Übersetzungsstufe vorgesehenen Betriebsniveau entspricht. Das Betriebsniveau der höheren Übersetzungsstufe ist durch einen geringeren Strombedarf der Getriebeeinrichtung 3 gekennzeichnet, so dass ein Strombedarf der Getriebeeinrichtung 3 durch den Wechsel vom Betriebsniveau auf das Bereitschaftsniveau reduziert ist. Dabei entspricht die aktorseitig eingelegte höhere Übersetzung vorliegend einem so genannten Notgang eines Übersetzungsbereiches der Getriebeeinrichtung, dem auch die Anfahrübersetzung zugeordnet ist.

Hiervon abweichend besteht auch die Möglichkeit, dass die aktorseitig in der Getriebeeinrichtung 3 eingelegte Übersetzung eine andere Übersetzung als der so genannte Notgang ist. Grundsätzlich ist die ausgewählte Übersetzung bzw. deren dazu gehörende Bestromung der Aktoren dadurch gekennzeichnet, dass diese einen geringeren Strombedarf verursacht als die Bestromung der Aktoren, die zur Darstellung der bei Vorliegen der Anforderung zum Abschalten der Brennkraftmaschine in der Getriebeeinrichtung 3 eingelegten Anfahrübersetzung erforderlich ist. Damit ist gewährleistet, dass die Anfahrübersetzung sicher nicht bei einem Ausfall des Bordnetzes, was durchaus auch bei höheren Fahrzeuggeschwindigkeiten der Fall sein kann, selbsttätig in der Getriebeeinrichtung eingelegt wird.

Die Getriebeeinrichtung 3 ist vorliegend als Acht-Gang-Automatgetriebe ausgebildet und die Anfahrübersetzung entspricht einer ersten Vorwärtsfahrstufe. Der Notgang entspricht in Abhängigkeit einer Ausführung der Getriebeeinrichtung einer vierten oder einer sechsten Vorwärtsfahrstufe, so dass bei einem Wechsel der Bestromung der Aktoren der Getriebeeinrichtung 3 aktorseitig entweder die zweite und die dritte Übersetzungsstufe oder die zweite bis fünfte Übersetzungsstufe für Vorwärtsfahrt zu überspringen sind.

Zur Erzielung eines möglichst großen Einsparungspotentiales wird die Bestromung der Aktoren bei Vorliegen einer Anforderung zum Abschalten der Brennkraftmaschine 2 derart verändert, dass sofort die zur Darstellung der sechste Übersetzungsstufe vorgesehenen Aktoren mit den zur Darstellung der sechste Vorwärtsfahrstufe vorgesehenen Stromwerten bestromt werden und die zur Darstellung der ersten Übersetzungsstufe bzw. der Anfahrübersetzung vorgesehenen Aktoren nicht mehr oder mit Stromwerten bestromt werden, die zur Durchführung eventueller Diagnosefunktionen erforderlich sind.

Falls in einer elektrischen Getriebesteuereinrichtung die für einen sofortigen Wechsel von der zu der ersten Übersetzungsstufe äquivalenten Bestromung hin zu der zu der vierten oder zu der sechsten Übersetzungsstufe äquivalenten Bestromung erforderlichen Schaltabläufe nicht hinterlegt sind, sondern nur so genannte Mehrfachschaltabläufe, gemäß denen auch die zwischen der ersten und vierten bzw. der ersten und der sechsten Übersetzungsstufe angeordneten bzw. vorgesehenen Übersetzungen zwei und drei 3 oder zwei bis fünf anzufahren sind, wird der Wechsel der Bestromung anhand der Mehrfachschaltabläufe durchgeführt. Dabei wird die Bestromung der Aktoren von den die erste Übersetzungsstufe darstellenden Stromwerten zunächst auf die die zweite und die dritte Übersetzungsstufe darstellenden Stromwerte eingestellt, bevor die Stromwerte das Niveau der vierten Übersetzungsstufe erreichen. Entspricht der Zielgang der sechsten Übersetzungsstufe, werden die Stromwerte jeweils nacheinander auf die zur Darstellung der ersten, der zweiten, der dritten, der vierten und der fünften Übersetzungsstufe erforderlichen Werte und erst dann auf die zur Darstellung der sechsten Übersetzungsstufe vorgesehenen Werte eingestellt.

Zusätzlich ist das Hydrauliksystem mit einem nicht näher in der Zeichnung dargestellten invers-proportionalen Aktor zur Einstellung eines Systemdruckes in dem Hydrauliksystem ausgebildet. Um den Systemdruck in dem Hydrauliksystem vor oder während des aktorseitigen Gangwechsels anzuheben, wird die Bestromung des invers-proportionalen Aktors abgesenkt, da der Systemdruck bei sinkenden Stromwerten für den Aktor ansteigt. Gleichzeitig nimmt auch die zur Einstellung des Systemdruckes im Hydrauliksystem im Bereich des invers-proportionalen Aktors in den Ölsumpf 9 der Getriebeeinrichtung 3 abgespritzte Hydraulikfluidvolumenanteil mit sinkenden Stromwerten ab, womit eine sogenannte Aktorleckage im Bereich des invers-proportionalen Aktors, die einen Gesamtwirkungsgrad der Getriebeeinrichtung negativ beeinflusst, auf einfache Art und Weise verringert wird.

Letztgenannter Zustand des invers-proportionalen Aktors wird während der gesamten Abschaltphase der Brennkraftmaschine 2 beibehalten und in Abhängigkeit des jeweils vorliegenden Anwendungsfalles erst wieder vor, während oder nach dem Start der Brennkraftmaschine wieder in Richtung der Normalfunktion des invers-proportionalen Aktors, gemäß der der Aktor während eines Fahrbetriebes betrieben wird, verändert.

Folgt auf das Signal zum Abschalten der Brennkraftmaschine 2 eine beispielsweise durch eine fahrerseitige Betätigung des Fahrpedals ausgelöste Anforderung zum Zuschalten bzw. Weiterbetreiben der Brennkraftmaschine 2, wird die aktorseitige Schaltung in den Zielgang, mittels welcher ein Strombedarf der Getriebeeinrichtung 3 reduziert werden soll, abgebrochen, wenn diese noch nicht abgeschlossen ist. Gleichzeitig wird die Getriebeeinrichtung in einen durch die Anforderung zum Betreiben der Brennkraftmaschine 2 gewünschten Betriebszustand durch eine entsprechende Bestromung der Aktoren überführt, wobei dieser Betriebszustand neben einer Übersetzung auch einem Neutralbetriebszustand oder einem Parkbetriebszustand der Getriebeeinrichtung 3 entsprechen kann .

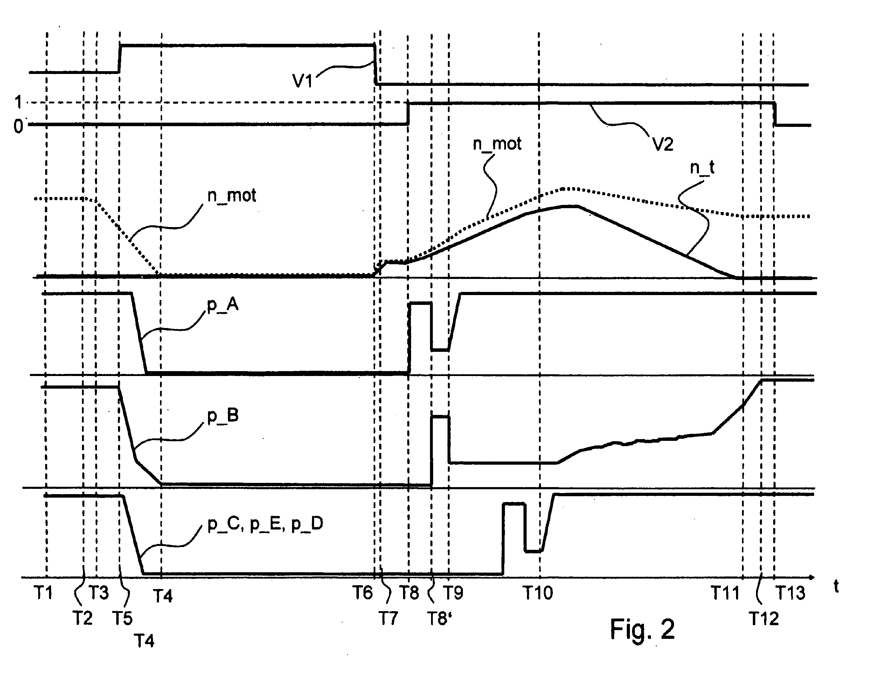

Fig. 2 zeigt mehrere Verläufe verschiedener Betriebszustandsparameter der Getriebeeinrichtung 3 des Fahrzeuges gemäß Fig. 1 über der Zeit t, wobei ein erster Verlauf V1 den Betriebszustand der Getriebeeinrichtung 3 bzw. die aktuell in der Getriebeeinrichtung 3 eingelegte Übersetzung wiedergibt. Unterhalb des Verlaufes V1 ist ein Verlauf der Motordrehzahl n_mot sowie ein Verlauf einer Turbinendrehzahl n_t dargestellt. Wiederum unterhalb des Verlaufes der Motordrehzahl n_mot und des Verlaufes der Turbinendrehzahl n_t sind mehrere Verläufe von Betätigungsdrücken p_A, p_B, p_C, p_D und p_E der Schaltelemente A bis E der Getriebeeinrichtung 3 dargestellt, um eine erste Übersetzungsstufe, eine zweite Übersetzungsstufe oder einen Rückwärtsgang in der Getriebeeinrichtung 3 einzulegen. Dabei ist der Verlauf p_A zur Betätigung des Schaltelementes A und der Verlauf p_B zur Betätigung des Schaltelementes B vorgesehen. Der unterste Verlauf entspricht jeweils dem Betätigungsverlauf p_C, p_E oder p_D zur Betätigung des Schaltelemente C, E oder D, wobei das Schaltelement C neben dem Schaltelement A und dem Schaltelement B zur Darstellung der ersten Übersetzungsstufe, das Schaltelement E neben den Schaltelementen A und B zur Darstellung der zweiten Übersetzungsstufe und das Schaltelement D neben den Schaltelementen A und B zur Darstellung des Rückwärtsganges in der Getriebeeinrichtung 3 jeweils zu betätigen ist.

Zu einem Zeitpunkt T1 ergeht von der Motor-Start-Stopp-Funktion eine Anforderung zum Abschalten der Brennkraftmaschine 2, wobei gemäß dem Verlauf V1 in der Getriebeeinrichtung 3 zum Zeitpunkt T1 die zweite Übersetzungsstufe eingelegt ist. Die Motordrehzahl n_mot befindet sich auf dem Niveau der Leerlaufdrehzahl und die Turbinendrehzahl n_t ist gleich Null, da das Fahrzeug still steht. Die Betätigungsdrücke p_A, p_B und p_E entsprechen dem jeweiligen Schließdruck der Schaltelemente A, B und E, zu welchen die Schaltelemente A, B und E jeweils ihre volle Übertragungsfähigkeit aufweisen. Zu einem Zeitpunkt T2 sinkt die Motordrehzahl n_mot aufgrund einer entsprechenden Motorsteuerung ab und fällt nach einem Zeitpunkt T3 mit steilerem Gradienten bis zu einem Zeitpunkt T4 auf den Wert Null ab.

Zu einem Zeitpunkt T5, der zeitlich zwischen den Zeitpunkten T3 und T4 liegt, wird die Bestromung der die Schaltelemente A, B und E betätigenden Aktoren der Getriebeeinrichtung 3 derart verändert, dass diese mit Stromwerten bestromt werden, mit welchen bei zugeschalteter Brennkraftmaschine 2 die sechste Übersetzungsstufe in der Getriebeeinrichtung 3 eingelegt ist. Damit ist in der Getriebeeinrichtung 3 zumindest aktorseitig in der Getriebeeinrichtung 3 eine sechste Übersetzungsstufe, welche bei dem Fig. 2 zugrunde liegenden Ausführungsbeispiel der Getriebeeinrichtung 3 einen Notgang der Getriebeeinrichtung 3 darstellt, eingelegt. Des Weiteren sinken die Betätigungsdrücke p_B und p_E der Schaltelemente B und E rampenförmig auf Null ab. Zum Zeitpunkt T4 sind die Betätigungsdrücke p_A, p_B und p_E sowie die Motordrehzahl n_mot gleich Null.

In diesem Betriebszustand weist die Getriebeeinrichtung 3 einen geringeren Strombedarf auf als bei eingelegter erster oder zweiter Übersetzungsstufe, da die sechste Übersetzungsstufe mit geringeren Stromwerten für die Aktoren dargestellt wird als die erste oder zweite Übersetzungsstufe. Die Schaltelemente A, B und E sind aufgrund der auf Null reduzierten Betätigungsdrücke p_A, p_B und p_E vollständig geöffnet. Dies resultiert einerseits aus der Tatsache, dass die Bestromung der die Schaltelemente A, B und E betätigenden Aktoren entsprechend reduziert ist und die Getriebehauptpumpe 4 das Hydrauliksystem der Getriebeeinrichtung 3 andererseits bei abgeschalteter Brennkraftmaschine 2 nicht länger mit Hydraulikfluid versorgt.

Vor einem Zeitpunkt T6, der den Startzeitpunkt eines Zuschaltvorganges der Brennkraftmaschine 2 kennzeichnet, ergeht eine Anforderung zum Zuschalten der Brennkraftmaschine 2. Gleichzeitig mit dem Start der Brennkraftmaschine 2 wird die Bestromung der Aktoren der Getriebeeinrichtung 3 derart verändert, dass in der Getriebeeinrichtung 3 die erste Übersetzungsstufe, die zweite bzw. eine höhere Übersetzungsstufe oder der Rückwärtsgang eingelegt wird. Welche dieser Übersetzungen in der Getriebeeinrichtung 3 eingelegt wird, ist abhängig von einer fahrerseitigen Wunschvorgabe. Ab dem Zeitpunkt T6 steigt die Motordrehzahl n_mot in der in Fig. 2 dargestellten Art und Weise zunächst bis zu einem Zeitpunkt T7 an und verbleibt auf diesem Niveau bis zu einem Zeitpunkt T8.

Zum Zeitpunkt T8 wird eine Funktion zum Gangwechsel vom zuvor aktorseitig in der Getriebeeinrichtung 3 eingestellten Notgang in Richtung einer durch einen Motorstart angeforderten Zielübersetzung in der Getriebeeinrichtung 3 gestartet, wobei der Start durch ein Umspringen eines Verlaufes V2 vom Wert Null nach Eins graphisch in Fig. 2 dargestellt ist.

Hiervon abweichend kann es auch vorgesehen sein, dass durch den angeforderten Motorstart in der Getriebeeinrichtung 3 ein Betriebszustand, wie ein Parkbetriebszustand oder ein Neutralbetriebszustand, einzustellen ist.

Mit der Aktivierung der Gangwechselroutine wird der Betätigungsdruck p_A des Schaltelementes A auf das Niveau eines Schnellfülldruckes angehoben und bis zu einem Zeitpunkt T8', der das Ende der Schnellfüllphase des Schaltelementes A darstellt, auf diesem Niveau belassen. Zum Zeitpunkt T8' wird der Betätigungsdruck p_A des Schaltelementes A auf das Niveau eines Füllausgleichsdruckes abgesenkt und bis zu einem Zeitpunkt T9, der wiederum das Ende der Füllausgleichsphase des Schaltelementes A repräsentiert, gehalten. Ab dem Zeitpunkt T9 wird der Betätigungsdruck p_A des Schaltelementes A rampenförmig auf das Niveau des Schließdruckes angehoben.

Bei weiteren Varianten des Verfahrens entfällt das Absenken des Betätigungsdruckes p_A des Schaltelementes A auf den Füllausgleichsdruckwert und der Betätigungsdruck p_A des Schaltelementes A wird ab dem Zeitpunkt T8' sofort auf das Niveau des Schließdruckes geführt.

Zum Zeitpunkt T8' wird der Betätigungsdruck p_B des Schaltelementes B ebenfalls auf das Niveau des Schnellfülldruckes angehoben und zum Zeitpunkt T9 auf das Niveau des Füllausgleichsdruckes wieder abgesenkt und erst zu einem Zeitpunkt T10, zu dem der Betätigungsdruck p_C, p_E, p_D des zur Darstellung der ersten Übersetzungsstufe, der zweiten Übersetzungsstufe oder des Rückwärtsganges zuzuschaltenden Schaltelementes C, E oder D dem Schließdruck entspricht, in der in Fig. 2 dargestellten Art und Weise moduliert ebenfalls auf das Niveau des Schließdruckes geführt. Dabei kann auch hier der Betätigungsdruck p_B des Schaltelementes B ab dem Zeitpunkt T9 ohne Füllausgleichphase auf das Niveau des Schließdruckes geführt werden.

Generell sind die Befüllungen der Schaltelemente A bis E in Abhängigkeit des jeweils vorliegenden Anwendungsfalles abweichend von der vorbeschriebenen Vorgehensweise aufeinander abstimmbar und die Betätigungsdrücke der nicht kraftschließenden Schaltelemente werden entweder nacheinander oder gleichzeitig, d. h. die vorbeschriebenen Ereignisse zu den Zeitpunkten T7 und T8 werden jeweils wenigstens annähernd zum selben Zeitpunkt angestoßen und eventuell gleichzeitig abgeschlossen, und vor dem Betätigungsdruck des kraftschließenden Schaltelementes auf den Schließdruck geführt. Des Weiteren ist der Betätigungsdruck wenigstens eines nicht kraftschließenden Schaltelementes gleichzeitig mit dem Betätigungsdruck des kraftschließenden Schaltelementes auf das Niveau des Schließdruckes führbar, wenn sich die Betätigungsdrücke der weiteren nicht kraftschließenden Schaltelemente jeweils bereits auf dem Niveau des Schließdruckes befinden.

Dabei stellen das Schaltelement A und das Schaltelement C, E oder D für die erste Übersetzungsstufe, die zweite Übersetzungsstufe oder den Rückwärtsgang jeweils die nicht kraftschließenden Schaltelemente dar, während das Schaltelement B das kraftschließende Schaltelement für die vorgenannten drei Betriebszustände der Getriebeeinrichtung 3 ist. Deshalb hat das Schließen des Schaltelementes A und des Schaltelementes C, E oder D auf den Verlauf der Motordrehzahl n_mot und der Turbinendrehzahl n_t nur einen unwesentlichen Einfluss. Erst das Schließen des kraftschließenden Schaltelementes B verändert den Verlauf der Motordrehzahl n_mot.

Die letztbeschriebene Zuweisung der Schaltelemente zu der Gruppe der nicht kraftschließenden Schaltelemente und zu der Gruppe der kraftschließenden Schaltelemente variiert jeweils in Abhängigkeit der Ausführung einer Getriebeeinrichtung und/oder in Abhängigkeit eines Fahrzeugantriebsstrangkonzeptes, in welches die jeweilige Getriebeeinrichtung integriert ist.

Zum Zeitpunkt T10, zu welchem die Schaltelemente A und C, E oder D bereits geschlossen sind, wird das Schaltelement B noch mit einem Betätigungsdruck auf dem Niveau des Füllausgleichsdruckes betätigt, so dass die Übertragungsfähigkeit des Schaltelementes B im Wesentlichen Null ist und die Wirkverbindung zwischen der Brennkraftmaschine 2 und dem Abtrieb des Fahrzeuges unterbrochen ist. Aus diesem Grund steigt die Motordrehzahl n_mot und die Turbinendrehzahl n_t in der in Fig. 2 dargestellten Art und Weise über der Zeit t in der dargestellten Art und Weise an. Die nach dem Zeitpunkt T10 dargestellt Anhebung des Betätigungsdruckes p_B des Schaltelementes B führt zu einem Anstieg der Übertragungsfähigkeit des Schaltelementes B. Das Ansteigen der Übertragungsfähigkeit des Schaltelementes B führt zu einer Verringerung der Turbinendrehzahl n_t bis zu dem Zeitpunkt T11 auf Null, während die Motordrehzahl n_mot bei entsprechender Ansteuerung der Brennkraftmaschine 2 auf das Niveau der Leerlaufdrehzahl geführt wird. Anschlie-ßend wird der Betätigungsdruck p_B bis zu einem Zeitpunkt T12 rampenförmig auf das Niveau des Schließdruckes geführt, womit die Getriebeeinrichtung 3 den mit der Anforderung zum Zuschalten der Brennkraftmaschine 2 angeforderten Betriebszustand aufweist.

Die modulierte Anhebung des Betätigungsdruckes p_B des Schaltelementes B unterstützt den Startvorgang der Brennkraftmaschine 2 dahingehend, dass die Drehzahl n_mot der Brennkraftmaschine behinderungsfrei ansteigen kann und anschließend durch Anheben der Übertragungsfähigkeit des Schaltelementes B eingefangen wird. Das bedeutet, dass ein unerwünscht hohes Ansteigen der Motordrehzahl n_mot über das Niveau der Leerlaufdrehzahl durch das gezielte Anheben der Übertragungsfähigkeit des Schaltelementes B vermieden wird. Die Motordrehzahl n_mot wird zwischen den Zeitpunkten T5 und T12 innerhalb einer bevorzugt kurzen Startzeit harmonisch auf das Niveau der Leerlaufdrehzahl geführt, womit ein Fahrzeug mit einem Antriebsstrang, der mit einer Motor-Start-Stopp-Funktion ausgeführt ist, sowohl mit hoher Spontaneität und als auch mit hohem Fahrkomfort betreibbar ist.

Die Druckanhebung des kraftschließenden Schaltelementes B erfolgt grundsätzlich in der Art, dass bei einem fahrerseitigen Anfahrwunsch, der durch die Betätigung des Fahrpedales ausgegeben wird, ausgehend von einem abgeschalteten Zustand der Brennkraftmaschine oder während eines Abschaltvorganges der Brennkraftmaschine sich ein definierter Motorhochlauf einstellt und das kraftschließende Schaltelement B bei Vorliegen einer von der Lastanforderung des Fahrers abhängigen Motoreinkuppeldrehzahl geschlossen wird.

Mittels des erfindungsgemäßen Verfahrens wird bei Vorliegen einer Anforderung zum Abschalten der Brennkraftmaschine der Strombedarf einer Getriebeeinrichtung mittels eines Wechsels der Bestromung der Aktoren einer Getriebeeinrichtung reduziert. Dieser Wechsel entspricht einer Veränderung der Bestromung, die auch während eines herkömmlichen Fahrbetriebes bei einer Übersetzungsänderung durchgeführt wird. Dabei wird in der Getriebeeinrichtung zumindest aktorseitig ein Gangwechsel vollzogen, da der Systemdruck in dem Hydrauliksystem bei abgeschalteter Brennkraftmaschine gleich Null ist und die veränderte Bestromung der Aktoren auf den Betriebszustand der Schaltelemente keine Auswirkung hat.

Die erfindungsgemäß vorgeschlagene Absenkung der Bestromung der Aktoren und der jeweils damit aktorseitig verbundene Gangwechsel in der Getriebeeinrichtung erfordern keine oder lediglich einfache programmtechnische Erweiterungen der Schaltabläufe bzw. der vorzugsweise in einem elektrischen Getriebesteuergerät hinterlegten Steuer- und Regelprozeduren, wie die Implementierung von Offsetwerten, da zur Reduzierung des Strombedarfs der Getriebeeinrichtung die bereits vorhandenen Schaltabläufe verwendet werden. Es sind lediglich Funktionalitäten vorzusehen, mittels welchen die zur Verringerung des Strombedarfes benötigten Schaltabläufe aufgerufen und abgearbeitet werden.

Des Weiteren ist durch die vorbeschriebene Maßnahme auch ein Fahrkomfort beim Motorabstellen durch den eingelegten höheren Gang auf einfache Art und Weise verbessert, weil ein Antriebstrang dann während des Abstellens der Brennkraftmaschine nicht wie in einem Neutralbetriebszustand der Getriebeeinrichtung lastlos ist. Die Verbesserung resultiert aus der Tatsache, dass die im Vergleich zur einer Anfahrübersetzung oder einem Rückwärtsgang in der Getriebeeinrichtung eingelegte Übersetzung, die die Wirkverbindung zwischen der Brennkraftmaschine und dem Abtrieb kennzeichnet, eine geringere Übersetzung aufweist und die während des Abstellvorganges der Brennkraftmaschine auftretenden Triebstrangschwingungen stärker dämpft. Aufgrund der im Vergleich zu einer Anfahrübersetzung geringeren Übersetzung des in der Getriebeeinrichtung eingelegten höheren Ganges werden auch zusätzlich Motordrehzahlschwankungen, die bekannterweise während eines Motorabschaltvorganges auftreten, in deutlich geringerem Maße in den Antriebstrang eingeleitet.

Das beschriebene Verfahren wird vorzugsweise bei nahezu stehendem Getriebeabtrieb, d. h. nahe dem Fahrzeugstillstand, durchgeführt, wobei es in Abhängigkeit des jeweils vorliegenden Anwendungsfalles auch sein kann, dass der Wechsel der Bestromung auch bei rollendem Fahrzeug durchgeführt wird.

### Bezugszeichen

- 1: Fahrzeug
- 2: Brennkraftmaschine
- 3: Getriebeeinrichtung
- 4: Druckquelle, Getriebehauptpumpe
- 7, 8: Aktor
- 9: Ölsumpf
- 10: Hydraulikspeichereinrichtung
- A bis: E Schaltelement
- n_mot: Motordrehzahl
- n_t: Turbinendrehzahl
- p_A: Verlauf des Betätigungsdruckes des Schaltelementes A
- p_B: Verlauf des Betätigungsdruckes des Schaltelementes B
- p_C: Verlauf des Betätigungsdruckes des Schaltelementes C
- p_D: Verlauf des Betätigungsdruckes des Schaltelementes D
- p_E: Verlauf des Betätigungsdruckes des Schaltelementes E
- V1, V2: Verlauf
- t: Zeit
- T1 bis T12: diskreter Zeitpunkt

## Patentansprüche

1. Verfahren zum Betätigen einer Getriebeeinrichtung (3) mit mehreren von einer Druckquelle (4) mit Hydraulikfluid beaufschlagbaren Schaltelementen (A bis E) zum Zu- und Abschalten verschiedener Übersetzungsstufen und mit mehreren elektrischen Aktoren (7, 8) eines Hydrauliksystems der Getriebeeinrichtung (3) zum Einstellen von Betätigungsdrücken für die Schaltelemente (A bis E), wobei die Bestromung der Aktoren (7, 8) bei Vorliegen einer Anforderung einer Motor-Start-Stopp-Funktion zum Abschalten einer Brennkraftmaschine (2) eines die Getriebeeinrichtung (3) aufweisenden Antriebsstranges von einem Betriebsniveau, auf dem die Aktoren (7, 8) jeweils mit einem zu einem betriebszustandsabhängigen Betätigungsdruck der Schaltelemente (A bis E) äquivalenten Stromwert bestromt werden, auf ein Bereitschaftsniveau eingestellt wird, und wobei die Bestromung der Aktoren (7, 8) bei einer Anforderung der Motor-Start-Stopp-Funktion zum Zuschalten der Brennkraftmaschine (2) vom Bereitschaftsniveau auf das Betriebsniveau eingestellt wird, ein Systemdruck im Hydrauliksystem bei abgeschalteter Brennkraftmaschine (2) Null ist und ein Stromverbrauch in der Getriebeeinrichtung während einer Bestromung (7, 8) der Aktoren auf dem Bereitschaftsniveau niedriger ist als auf dem Betriebsniveau, **dadurch gekennzeichnet, dass** das bei Vorliegen einer Anforderung zum Abschalten Brennkraftmaschine (2) zur Bestromung der Aktoren (7, 8) ausgewählte Bereitschaftsniveau einem zur Darstellung einer Übersetzung vorgesehen Betriebsniveau entspricht.

2. Verfahren nach Anspruch 1, **dadurch gekennzeichnet, dass** mittels des Betriebsniveaus, auf dem die Aktoren (7, 8) zum Ausgabezeitpunkt der Abschaltanforderung der Brennkraftmaschine (2) bestromt werden, in der Getriebeeinrichtung (3) eine Anfahrübersetzung für ein Fahrzeug (1) darstellbar ist.

3. Verfahren nach Anspruch 1 oder 2, **dadurch gekennzeichnet, dass** mittels des Bereitschaftsniveaus, auf dem die Aktoren (7, 8) bei abgeschalteter Brennkraftmaschine (2) bestromt werden, in der Getriebeeinrichtung (3) ein Notgang, der sich vorzugsweise im mechanischen Notlauf der Getriebeeinrichtung (3) einstellt, darstellbar ist.

4. Verfahren nach einem der Ansprüche 1 bis 3, **dadurch gekennzeichnet, dass** der bei Vorliegen einer Anforderung zum Abschalten der Brennkraftmaschine (2) vorgesehene Wechsel der Bestromung der Aktoren (7, 8), bei der die Getriebeeinrichtung (3) aktorseitig von einer Ausgangsübersetzung in eine Zielübersetzung überführt wird, mittels eines während eines Fahrbetriebes eines Fahrzeuges (1) vorgesehenen Schaltablaufes durchgeführt wird.

5. Verfahren nach Anspruch 4, **dadurch gekennzeichnet, dass** über den Schaltablauf mehrere aufeinander folgende Schaltungen realisiert werden.

6. Verfahren nach einem der Ansprüche 1 bis 5, **dadurch gekennzeichnet, dass** ein invers-proportionaler Aktor zur Einstellung eines Systemdruckes in dem Hydrauliksystem vorgesehen ist, wobei der Systemdruck bei sinkenden Stromwerten steigt, die Bestromung des invers-proportionalen Aktors bei Vorliegen einer Anforderung zum Abschalten der Brennkraftmaschine (2) reduziert und vorzugsweise bei abgeschalteter Brennkraftmaschine (2) auf einem vordefinierten Wert belassen wird.

7. Verfahren nach einem der Ansprüche 1 bis 6, **dadurch gekennzeichnet, dass** die bei Vorliegen einer Anforderung zum Abschalten der Brennkraftmaschine (2) aktivierte Wechselroutine zum Reduzieren der Höhe der Bestromung der Aktoren (7, 8) vom Betriebsniveau auf das Bereitschaftsniveau bei Vorliegen einer Anforderung zum Zuschalten der Brennkraftmaschine (2) zu einem Betriebszustand der Brennkraftmaschine (2), zu dem die Brennkraftmaschine (2) noch weiter betreibbar ist, deaktiviert wird und die Brennkraftmaschine (2) weiter betrieben wird.

8. Verfahren nach einem der Ansprüche 1 bis 7, **dadurch gekennzeichnet, dass** die Aktoren (7, 8) während des Wechsels der Bestromung vom Bereitschaftsniveau auf das Betriebsniveau derart bestromt werden, dass ein Betätigungsdruck eines zur Darstellung der durch das Betriebsniveau einzustellenden Zielübersetzung vorgesehenen nicht-kraftschließenden Schaltelementes (A, C, D, E) oder die Betätigungsdrücke mehrerer zur Darstellung der Zielübersetzung vorgesehener nicht-kraftschließender Schaltelemente (A, C, D, E) auf einen Schließdruck, zu dem das oder die Schaltelemente (A, C, D, E) wenigstens annähernd ihre volle Übertragungsfähigkeit aufweisen, angehoben wird oder angehoben werden und anschließend der Betätigungsdruck eines zur Darstellung der Zielübersetzung vorgesehenen kraftschließenden Schaltelementes (B) vorzugsweise moduliert auf den Schließdruck angehoben wird.

9. Verfahren nach einem der Ansprüche 1 bis 7, **dadurch gekennzeichnet, dass** die Aktoren (7, 8) während des Wechsels der Bestromung vom Bereitschaftsniveau auf das Betriebsniveau derart bestromt werden, dass ein Betätigungsdruck wenigstens eines zur Darstellung der durch das Betriebsniveau einzustellenden Zielübersetzung vorgesehenen nicht kraftschließenden Schaltelementes (A, C, D, E) auf einen Schließdruck, zu dem das Schaltelemente (A, C, D, E) wenigstens annähernd seine volle Übertragungsfähigkeit aufweist, angehoben wird und anschließend die Betätigungsdrücke wenigstens eines weiteren nicht kraftschließenden Schaltelementes (A, C, D, E) und eines zur Darstellung der Zielübersetzung vorgesehenen kraftschließenden Schaltelementes (B) gleichzeitig vorzugsweise moduliert auf den Schließdruck angehoben werden.

10. Verfahren nach einem der Ansprüche 1 bis 9, **dadurch gekennzeichnet, dass** der bei Vorliegen einer Anforderung zum Zuschalten der Brennkraftmaschine (2) vorgesehene Wechsel der Bestromung der Aktoren (7, 8), bei der in der Getriebeeinrichtung (2) aktorseitig von einer Ausgangsübersetzung in eine Zielübersetzung gewechselt wird, mittels eines während eines Fahrbetriebes eines Fahrzeuges (1) vorgesehenen Schaltablaufes durchgeführt wird.

11. Verfahren nach Anspruch 10, **dadurch gekennzeichnet, dass** über den Schaltablauf zumindest aktorseitig mehrere aufeinander folgende Schaltungen in der Getriebeeinrichtung (3) realisiert werden.

12. Verfahren nach einem der Ansprüche 1 bis 11, **dadurch gekennzeichnet, dass** die Veränderung der Bestromung der Aktoren (7, 8) beim Wechsel vom Betriebsniveau auf das Bereitschaftsniveau oder vom Bereitschaftsniveau auf das Betriebsniveau im Bereich der verschiedenen Aktoren (7, 8) nacheinander durchgeführt wird.

## Claims

1. Method for actuating a geared device (3) having a plurality of shift elements (A to E) on which a pressure source (4) can act with hydraulic fluid in order to switch on and off various transmission stages and having a plurality of electrical actuators (7, 8) of a hydraulic system of the geared device (3) for setting activation pressures for the shift elements (A to E), wherein the actuators (7, 8) are energized when a request is present from an engine start/stop function to switch off an internal combustion engine (2) of a drive train, having the geared device (3), from an operating level at which the actuators (7, 8) are each energized with a current value which is equivalent to an activation pressure of the shift elements (A to E) which is dependent on an operating state to a standby level, and wherein the energization of the actuators (7, 8) is set from the standby level to the operating level when there is a request from the engine start/stop function to switch on the internal combustion engine (2), a system pressure in the hydraulic system is zero when the internal combustion engine (2) is switched off, and current consumption in the geared device is lower during energization (7, 8) of the actuators at the standby level than at the operating level, **characterized in that** the standby level which is selected when there is a request to switch off the internal combustion engine (2) in order to energize the actuators (7, 8) corresponds to an operating level which is provided to bring about a transmission ratio.

2. Method according to Claim 1, **characterized in that** a starting transmission ratio for a vehicle (1) can be brought about in the geared device (3) by means of the operating level at which the actuators (7, 8) are energized at the output time of the switch-off request of the internal combustion engine (2).

3. Method according to Claim 1 or 2, **characterized in that** an emergency gearspeed, which is preferably set in the mechanical emergency running mode of the geared device (3), can be brought about in the geared device (3) by means of the standby level at which the actuators (7, 8) are energized when the internal combustion engine (2) is switched off.

4. Method according to one of Claims 1 to 3, **characterized in that** the changeover of the energization of the actuators (7, 8) which is provided when a request to switch off the internal combustion engine (2) is present, at which request the geared device (3) is transferred on the actuator side from an initial transmission ratio to a target transmission ratio, is carried out by means of a shift sequence which is provided during a driving mode of a vehicle (1).

5. Method according to Claim 4, **characterized in that** a plurality of successive shift operations are implemented by means of the shift sequence.

6. Method according to one of Claims 1 to 5, **characterized in that** an inversely proportional actuator for setting a system pressure is provided in the hydraulic system, wherein the system pressure rises when the current values drop, and the energization of the inversely proportional actuator is reduced when a request to switch off the internal combustion engine (2) is present and is preferably left at a predefined value when the internal combustion engine (2) is switched off.

7. Method according to one of Claims 1 to 6, **characterized in that** the changeover routine which is activated when a request to switch off the internal combustion engine (2) is present and which has the purpose of reducing the level of the energization of the actuators (7, 8) from the operating level to the standby level when a request to switch on the internal combustion engine (2) is present is deactivated in an operating state of the internal combustion engine (2) in which the internal combustion engine (2) can still continue to be operated, and the internal combustion engine (2) continues to be operated.

8. Method according to one of Claims 1 to 7, **characterized in that** during the changeover of the energization from the standby level to the operating level the actuators (7, 8) are energized in such a way that an activation pressure of a non-force-closing shift element (A, C, D, E) which is provided to bring about the target transmission ratio which is to be set by the operating level or the activation pressures of a plurality of non-force-closing shift elements (A, C, D, E) which are provided to bring about the target transmission ratio is/are raised to a closing pressure at which the shift element or elements (A, C, D, E) has/have at least approximately their full transmission capability, and the activation pressure of a force-closing shift element (B) which is provided to bring about the target transmission ratio is subsequently preferably raised to the closing pressure in a modulated fashion.

9. Method according to one of Claims 1 to 7, **characterized in that** during the changeover of the energization from the standby level to the operating level the actuators (7, 8) are energized in such a way that an activation pressure of at least one non-force-closing shift element (A, C, D, E) which is provided to bring about the target transmission ratio which is to be set by the operating level is raised to a closing pressure at which the shift element (A, C, D, E) has at least approximately its full transmission capability, and subsequently the activation pressures of at least one further non-force-closing shift element (A, C, D, E) and of a force-closing shift element (B) which is provided to bring about the target transmission ratio are raised simultaneously to the closing pressure, preferably in a modulated fashion.

10. Method according to one of Claims 1 to 9, **characterized in that** the changeover of the energization of the actuators (7, 8) which is provided when a request to switch on the internal combustion engine (2) is present, at which request there is a changeover in the geared device (3) on the actuator side from an initial transmission ratio into a target transmission ratio, is carried out by means of a shift sequence which is provided during a driving mode of a vehicle (1).

11. Method according to Claim 10, **characterized in that** a plurality of successive shift operations are implemented in the geared device (3) at least on the actuator side by means of the shift sequence.

12. Method according to one of Claims 1 to 11, **characterized in that** the modification of the energization of the actuators (7, 8) when there is a changeover from the operating level to the standby level or from the standby level to the operating level is carried out in succession in the region of the various actuators (7, 8).

## Revendications

1. Procédé d'actionnement d'un dispositif de transmission (3) comprenant plusieurs éléments de commutation (A à E) pouvant être sollicités par du fluide hydraulique depuis une source de pression (4), pour engager et désengager différents étages de multiplication, et comprenant plusieurs actionneurs électriques (7, 8) d'un système hydraulique du dispositif de transmission (3) pour l'ajustement de pressions d'actionnement pour les éléments de commutation (A à E), l'alimentation en courant des actionneurs (7, 8), dans le cas d'une demande d'une fonction de marche-arrêt du moteur de couper un moteur à combustion interne (2) d'une chaîne cinématique présentant le dispositif de transmission (3), étant ajustée d'un niveau de fonctionnement auquel les actionneurs (7, 8) sont alimentés à chaque fois avec une valeur de courant équivalente à une pression d'actionnement des éléments de commutation (A à E) dépendant de l'état de fonctionnement à un niveau d'attente, et l'alimentation en courant des actionneurs (7, 8), dans le cas d'une demande d'une fonction de marche-arrêt du moteur de mettre en route le moteur à combustion interne (2), étant ajustée du niveau d'attente au niveau de fonctionnement, une pression du système dans le système hydraulique étant nulle lorsque le moteur à combustion interne (2) est coupé, et une consommation de courant dans le dispositif de transmission pendant une alimentation en courant des actionneurs (7, 8) au niveau d'attente étant inférieure à la consommation de courant au niveau de fonctionnement, **caractérisé en ce que** le niveau d'attente choisi dans le cas d'une demande de coupure du moteur à combustion interne (2) pour alimenter en courant les actionneurs (7, 8) correspond à un niveau de fonctionnement prévu pour effectuer une multiplication.

2. Procédé selon la revendication 1, **caractérisé en ce qu'**au moyen du niveau de fonctionnement auquel les actionneurs (7, 8) sont alimentés en courant à l'instant d'émission de la demande de coupure du moteur à combustion interne (2), une multiplication de démarrage pour un véhicule (1) peut être réalisée dans le dispositif de transmission (3).

3. Procédé selon la revendication 1 ou 2, **caractérisé en ce qu'**au moyen du niveau d'attente auquel les actionneurs (7, 8) sont alimentés en courant lorsque le moteur à combustion interne (2) est coupé, un rapport de secours, qui s'établit de préférence dans un mode de fonctionnement mécanique de secours du dispositif de transmission (3), peut être réalisé dans le dispositif de transmission (3).

4. Procédé selon l'une quelconque des revendications 1 à 3, **caractérisé en ce que** le changement prévu, dans le cas d'une demande de coupure du moteur à combustion interne (2), de l'alimentation en courant des actionneurs (7, 8) avec laquelle le dispositif de transmission (3) est transféré par les actionneurs d'une multiplication de départ dans une multiplication visée, est effectué au moyen d'un déroulement de commutation prévu pendant un mode de conduite d'un véhicule (1).

5. Procédé selon la revendication 4, **caractérisé en ce que** plusieurs commutations successives sont réalisées par le biais du déroulement de commutation.

6. Procédé selon l'une quelconque des revendications 1 à 5, **caractérisé en ce qu'**il est prévu un actionneur inversement proportionnel pour l'ajustement d'une pression de système dans le système hydraulique, la pression du système augmentant pour des valeurs de courant qui diminuent, l'alimentation en courant de l'actionneur inversement proportionnel est réduite dans le cas d'une demande de coupure du moteur à combustion interne (2) et de préférence est laissée a aune valeur prédéfinie lorsque le moteur à combustion interne (2) est coupé.

7. Procédé selon l'une quelconque des revendications 1 à 6, **caractérisé en ce que** le sous-programme de changement activé dans le cas d'une demande de coupure du moteur à combustion interne (2) pour réduire la quantité d'alimentation en courant des actionneurs (7, 8) du niveau de fonctionnement au niveau d'attente, est désactivé dans le cas d'une demande de mise en marche du moteur à combustion interne (2) à un état de fonctionnement du moteur à combustion interne (2) auquel le moteur à combustion interne (2) peut encore continuer de fonctionner, et le moteur à combustion interne (2) continue de fonctionner.

8. Procédé selon l'une quelconque des revendications 1 à 7, **caractérisé en ce que** les actionneurs (7, 8), pendant le changement de l'alimentation en courant du niveau d'attente au niveau de fonctionnement, sont alimentés en courant de telle sorte qu'une pression d'actionnement d'un élément de commutation (A, C, D, E) non engagé par force, prévu pour réaliser la multiplication visée à ajuster par le niveau de fonctionnement, ou que les pressions d'actionnement de plusieurs éléments de commutation (A, C, D, E) non engagés par force, prévus pour réaliser la multiplication visée, soit augmentée, ou soient augmentées à une pression de fermeture à laquelle le ou les éléments de commutation (A, C, D, E) présentent au moins approximativement leur pleine capacité de transmission, et ensuite, la pression d'actionnement d'un élément de commutation (B) engagé par force, prévu pour réaliser la multiplication visée, est de préférence augmentée de manière modulée à la pression de fermeture.

9. Procédé selon l'une quelconque des revendications 1 à 7, **caractérisé en ce que** les actionneurs (7, 8), pendant le changement d'alimentation en courant du niveau d'attente au niveau de fonctionnement, sont alimentés en courant de telle sorte qu'une pression d'actionnement d'au moins un élément de commutation (A, C, D, E) non engagé par force, prévu pour réaliser la multiplication visée à ajuster par le niveau de fonctionnement, soit augmentée à une pression de fermeture à laquelle l'élément de commutation (A, C, D, E) présente au moins approximativement sa pleine capacité de transmission, et ensuite les pressions d'actionnement d'au moins un autre élément de commutation (A, C, D, E) non engagé par force et d'un élément de commutation (B) engagé par force, prévu pour réaliser la multiplication visée, sont augmentées simultanément de préférence de manière modulée à la pression de fermeture.

10. Procédé selon l'une quelconque des revendications 1 à 9, **caractérisé en ce que** le changement prévu, dans le cas d'une demande de mise en marche du moteur à combustion interne (2), de l'alimentation en courant des actionneurs (7, 8) avec laquelle les actionneurs effectuent dans le dispositif de transmission (3) un changement d'une multiplication de départ à une multiplication visée, est effectué au moyen d'un déroulement de commutation prévu pendant un mode de conduite d'un véhicule (1).

11. Procédé selon la revendication 10, **caractérisé en ce que** plusieurs commutations successives sont réalisées dans le dispositif de transmission (3) par les actionneurs par le biais du déroulement de commutation.

12. Procédé selon l'une quelconque des revendications 1 à 11, **caractérisé en ce que** la modification de l'alimentation en courant des actionneurs (7, 8) lors du changement du niveau de fonctionnement au niveau d'attente ou du niveau d'attente au niveau de fonctionnement est effectuée successivement dans la région des différents actionneurs (7, 8).
